# EUROPEAN PATENT SPECIFICATION

(11) **EP 4 593 122 B1**
(45) Date of publication and mention of the grant of the patent: **04.11.2026**
(21) Application number: 25179271.9
(22) Date of filing: 20.04.2023
(51) Int. Cl.: H01M 4/62, H01M 4/04, H01M 4/131, H01M 4/1391, C08L 27/16, C08L 27/18, C08L 27/20, C08K 3/22, C09D 127/16, C09D 127/18, H01M 4/02

(54) **FLUOROPOLYMER BINDER FOR LITHIUM-ION SECONDARY BATTERY CATHODE**
FLUORPOLYMERBINDEMITTEL FÜR LITHIUM-IONEN-SEKUNDÄRBATTERIEKATHODE
LIANT FLUOROPOLYMÈRE POUR CATHODE DE BATTERIE SECONDAIRE AU LITHIUM-ION

(30) Priority: 20.04.2022 US 202263332806 P
(43) Date of publication of application: 30.07.2025
(62) Document number(s) of the earlier application(s) in accordance with Art. 76 EPC: 23723756.5 / 4 511 891
(73) Proprietor: The Chemours Company FC, LLC, Wilmington, Delaware 19801 (US); Chemours-Mitsui Fluoroproducts Co., Ltd, Tokyo 105-0001 (JP); LG ENERGY SOLUTION, LTD., Seoul 07335 (KR)
(72) Inventor: Ko, Seung Kyung, Seoul (KR); Jeong, Chorong, Shizuoka (JP); Terauchi, Kenji, Shizuoka (JP); Kang, Seong Wook, Daejeon (KR); Kwak, Sang Min, Daejeon (KR); Han, Jaesung, Daejeon (KR); Lee, Ki Seok, Daejeon (KR)
(74) Representative: Mewburn Ellis LLP

(56) References cited:
- WO-A1-2023/094623
- US-A1- 2005 250 908
- US-A1- 2015 303 481

## Description

### FIELD

The present invention relates to a fluoropolymer binder composition for use in a lithium-ion secondary battery cathode.

### SUMMARY

The present invention provides a fluoropolymer binder composition for use in a lithium-ion secondary battery cathode, comprising: i.) tetrafluoroethylene polymer and ii.) elastomeric fluoropolymer (alternately referred to herein as fluoroelastomer), wherein said tetrafluoroethylene polymer is fibrillated, and wherein said elastomeric fluoropolymer has a Mooney viscosity of at least about 4.98 Nm (60 MU) measured under conditions ML 1 + 10 (121°C) according to ASTM D1646. The tetrafluoroethylene polymer is generally selected from high molecular weight non-melt fabricable tetrafluoroethylene homopolymer, and high molecular weight non-melt fabricable modified tetrafluoroethylene homopolymer. The elastomeric fluoropolymer is generally a vinylidene fluoride elastomeric fluoropolymer. The binder composition is formed by a process free from solvent, generally, by dry mixing the tetrafluoroethylene polymer and the elastomeric fluoropolymer, and in one embodiment, applying a shear force to the composition, whereby the tetrafluoroethylene polymer is fibrillated.

Further described is a cathode composition for use in a lithium-ion secondary battery cathode, comprising: the aforementioned fluoropolymer binder composition, further containing cathode active particles and conductive carbon. The present cathode composition has elasticity such that a calendared film of the composition suitable for use as a cathode electrode film in a lithium-ion battery can be formed into a tubular shape without fracture.

Further described is a method for manufacturing the aforementioned cathode composition for use in a lithium-ion secondary battery cathode, comprising mixing elastomeric fluoropolymer, cathode active particles, tetrafluoroethylene polymer and conductive carbon to form the cathode composition. In one embodiment the method involves mixing elastomeric fluoropolymer and cathode active particles to form a fluoroelastomer and cathode active composition, then mixing this composition with tetrafluoroethylene polymer and conductive carbon to form the cathode composition. The steps of the present method of mixing are carried out free from solvent, and generally involve dry mixing and applying a shear force to the composition of fluoroelastomer, cathode active particles, tetrafluoroethylene polymer and conductive carbon, whereby the shear force is sufficient such that said tetrafluoroethylene polymer is fibrillated.

### BRIEF DESCRIPTION OF THE DRAWINGS

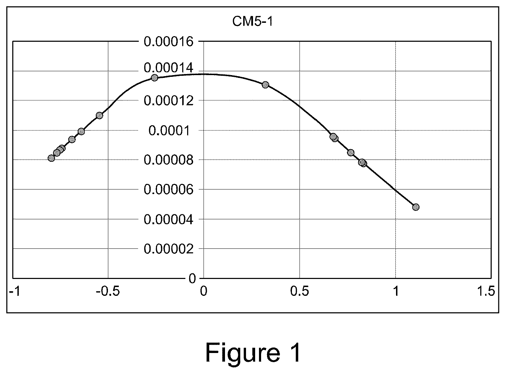

Figure 1, Figure 2, Figure 3 and Figure 4 are fluorine content distribution plots obtained from LIBS microscopy carried out on films of present compositions of cathode active, tetrafluoroethylene polymer and elastomeric fluoropolymer.

### DETAILED DESCRIPTION

In one embodiment the present invention is a fluoropolymer binder composition for use in a lithium-ion secondary battery cathode, comprising: i.) fibrillated tetrafluoroethylene polymer, and ii.) elastomeric fluoropolymer.

Further described is a cathode composition for use in a lithium-ion secondary battery cathode, comprising: i.) fibrillated tetrafluoroethylene polymer, ii.) elastomeric fluoropolymer, iii.) cathode active particles, and iv.) conductive carbon.

In one embodiment the cathode composition has elasticity such that a calendared film of the composition suitable for use as a cathode electrode film in a lithium-ion battery can be formed into a tubular shape without fracture.

In one embodiment the present tetrafluoroethylene polymer has a melt creep viscosity of at least about 1.8 x 10¹⁰ Pa·s (1.8 x 10¹¹ poise). In another embodiment, tetrafluoroethylene polymer has a melt creep viscosity of at least about 2.0 x 10¹⁰ Pa·s (2.0 x 10¹¹ poise). In another embodiment, tetrafluoroethylene polymer has a melt creep viscosity of at least about 3.0 x 10¹⁰ Pa·s (3.0 x 10¹¹ poise). In a preferred embodiment, tetrafluoroethylene polymer has a melt creep viscosity of at least about 4.0 x 10¹⁰ Pa·s (4.0 x 10¹¹ poise). Herein, melt creep viscosity (MCV) is measured by the method described in Ebnesajjad, Sina, (2015), Fluoroplastics, Volume 1 - Non-Melt Processible Fluoropolymers - The Definitive User's Guide and Data Book (2nd Edition), Appendix 5, Melt Creep Viscosity of Polytetrafluoroethylene, pp. 660-661, with reference to US patent 3,819,594.

The present tetrafluoroethylene polymer is a polymer comprising repeating units of tetrafluoroethylene monomer, also referred to in this field as TFE, and has a melt creep viscosity of at least about 1.8 x 10¹⁰ Pa·s (1.8 x 10¹¹ poise). With such high melt viscosity, the polymer does not flow in the molten state and therefore is not a melt-processible polymer. In one embodiment, the tetrafluoroethylene polymer is a tetrafluoroethylene homopolymer, containing only repeating units of the tetrafluoroethylene monomer, also known in this field as polytetrafluoroethylene, abbreviated as PTFE. In another embodiment the tetrafluoroethylene polymer is a "modified" PTFE, referring to copolymers of TFE with such small concentrations of comonomer that the melting point of the resultant polymer is not substantially reduced below that of PTFE. The concentration of such comonomer is less than 1 wt %, preferably less than 0.5 wt %. A minimum amount of at least about 0.05 wt % is used to have significant effect. Example comonomer of modified PTFE include perfluoroolefins, notably hexafluoropropylene (HFP) or perfluoro(alkyl vinyl ether) (PAVE), where the alkyl group contains 1 to 5 carbon atoms, with perfluoro(ethyl vinyl ether) (PEVE) and perfluoro(propyl vinyl ether) (PPVE) being preferred. Further examples of comonomers of modified PTFE include chlorotrifluoroethylene (CTFE) and perfluorobutyl ethylene (PFBE), or other similar monomers that introduce bulky side groups into the polymer chain.

The present tetrafluoroethylene polymer is fibrillatable. By fibrillatable is meant that the tetrafluoroethylene polymer is capable of forming nanosized in at least one dimension (i.e. <100 nm width) fibrils which can vary in length from submicron to several microns in length when the tetrafluoroethylene polymer is exposed to shear, e.g., during the present mixing method for manufacturing a cathode composition.

The present elastomeric fluoropolymer has a Mooney viscosity of at least about 4.98 Nm (60 MU) measured under conditions ML 1 + 10 (121°C) according to ASTM D1646. In a preferred embodiment the elastomeric fluoropolymer has a Mooney viscosity of at least about 5.81 Nm (70 MU) measured under conditions ML 1 + 10 (121°C) according to ASTM D1646.

The present elastomeric fluoropolymer are elastomers, that provide elasticity to the present cathode composition such that a calendared film of the composition can be formed into a tubular shape without fracture, e.g., a tubular shape having a radius of curvature sufficient for utility as cathode electrode film in a lithium-ion battery.

Example elastic fluoropolymers include: vinylidene fluoride/hexafluoropropylene (VDF/HFP), vinylidene fluoride/ hexafluoropropylene/tetrafluoroethylene (VDF/HFP/TFE), vinylidene fluoride/perfluoro(methyl vinyl ether)/tetrafluoroethylene (VDF/PMVE/TFE), tetrafluoroethylene/perfluoro(methyl vinyl ether) (TFE/PMVE), tetrafluoroethylene/propylene (TFE/P) and ethylene/tetrafluoroethylene/perfluoro(methyl vinyl ether) (E/TFE/PMVE).

Alternately, elastic fluoropolymers of utility in the present invention can be described as:
(A) VDF-based elastic fluoropolymers, in which VDF is copolymerized with at least one additional comonomer selected from the group consisting of:
   (i) C2-C8 perfluoroolefins, such as tetrafluoroethylene (TFE), hexafluoropropylene (HFP);
   (ii) hydrogen-containing C2-C8 olefins, such as vinyl fluoride (VF), trifluoroethylene, hexafluoroisobutene, perfluoroalkyl ethylenes of formula CH2=CH-Rf, wherein Rf is a C1-C6 perfluoroalkyl group;
   (iii) C2-C8 fluoroolefins comprising at least one of iodine, chlorine and bromine, such as chlorotrifluoroethylene (CTFE);
   (iv) (per)fluoroalkylvinylethers (PAVE) of formula CF2=CFORf, wherein Rf is a C1-C6 (per)fluoroalkyl group, preferably -CF3, -C2F5, -C3F7;
   (v) (per)fluoro-oxy-alkylvinylethers of formula CF2=CFOX, wherein X is a C1-C12 ((per)fluoro)-oxyalkyl comprising catenary oxygen atoms, e.g. the perfluoro-2-propoxypropyl group;
   (vi) (per)fluorodioxoles;
   (vii) (per)fluoro-methoxy-vinylethers having formula: CF2=CFOCF2ORf2, wherein Rf2 is selected from the group consisting of C1-C6 (per)fluoroalkyls; C5-C6 cyclic (per)fluoroalkyls; and C2-C6 (per)fluorooxyalkyls, comprising at least one catenary oxygen atom; Rf2 is preferably -CF2CF3; -CF2CF2OCF3; or -CF3;
   (viii) C2-C8 non-fluorinated olefins, for example ethylene and propylene; and
   (2) TFE-based elastic fluoropolymers, in which TFE is copolymerized with at least one additional comonomer selected from the group consisting of (i) through (vii) as described immediately above.

In a preferred embodiment the elastic fluoropolymer is a vinylidene fluoride copolymer, more preferably a vinylidene fluoride, hexafluoropropylene and tetrafluoroethylene copolymer.

In one embodiment the elastomeric fluoropolymer binder is crosslinked. Crosslinking not only improves the mechanical properties of the polymer, but also helps provide good contact between the components of the present cathode composition.

In a preferred embodiment, the fluoropolymer binder composition comprises tetrafluoroethylene homopolymer having a melt creep viscosity of at least about 4.0 x 10¹⁰ Pa·s (4.0 x 10¹¹ poise), and the elastomeric fluoropolymer is a vinylidene fluoride, hexafluoropropylene and tetrafluoroethylene copolymer.

In one embodiment, the weight ratio of the tetrafluoroethylene polymer to the elastomeric fluoropolymer in the present binder and cathode composition is from about 4:1 to about 1:4. In a preferred embodiment, the weight ratio of the tetrafluoroethylene polymer to said elastomeric fluoropolymer is about 1:1. The amount of elastomeric fluoropolymer in the cathode composition can be determined within this range by one of average skill in this field, and is preferably the minimal amount necessary for a film of the present cathode composition to satisfactorily perform in a cathode having a radius of curvature necessary for a given lithium-ion battery.

In one embodiment of the present cathode composition, the amount of the fluoropolymer binder is from about 2 to about 10 weight percent, the amount of the cathode active particles is from about 90 to about 97 weight percent, and the amount of the conductive carbon is from about 0.1 to about 5 weight percent, based on the combined weight of the fluoropolymer binder, the cathode active particles, and the conductive carbon.

In one embodiment, the amount of the tetrafluoroethylene polymer in the cathode composition is about 2 weight percent, the amount of the elastomeric fluoropolymer is about 2 weight percent, the amount of the cathode active particles is about 95 weight percent, and the amount of the conductive carbon is about 1 weight percent, based on the combined weight of the fluoropolymer binder, the cathode active particles, and the conductive carbon. In one embodiment, the amount of the tetrafluoroethylene polymer in the cathode composition is about 1 weight percent, the amount of the elastomeric fluoropolymer is about 1 weight percent, the amount of the cathode active particles is about 97 weight percent, and the amount of the conductive carbon is about 1 weight percent, based on the combined weight of the fluoropolymer binder, the cathode active particles, and the conductive carbon.

The present cathode active particles are selected from electrochemical cathode active materials known in this field. Example cathode active particles include metal oxide, metal sulfide, or a lithium metal oxide. In a preferred embodiment, the cathode active particles comprise a lithium transition metal oxide. Example lithium metal oxides include: lithium nickel manganese cobalt oxide (NMC), lithium manganese oxide (LMO), lithium iron phosphate (LiFePO₄), lithium cobalt oxide (LCO), lithium titanate (LTO), and/or lithium nickel cobalt aluminum oxide (NCA). In some embodiments, cathode active materials can comprise, for example, a layered transition metal oxide (such as LiCoO₂ (LCO), Li(NiMnCo)O₂ (NMC), LiNi_{0.8}Co_{0.15}Al_{0.05}O₂ (NCA)), spinel manganese oxide (such as LiMn₂O₄ (LMO), LiMn_{1.5}Ni_{0.5}O₄ (LMNO)) or an olivine (such as LiFePO₄), LiNiO₂, LiNi₁₋ₓCoₓO₂, LiNi_{0.85}Co_{0.1}Al_{0.05}O₂, LiNi_{0.33}Co_{0.33}Mn_{0.33}O₂, LiMn₂O₄, and combinations thereof.

The present conductive carbon is selected from electro-conductive carbon materials known in this field. Example conductive carbon materials include carbon black, porous carbon, carbon nanotubes, carbon fiber, VGCF (vapor grown carbon fiber), graphene sheets, acetylene black, and combinations thereof.

Further described herein is a method for manufacturing a cathode composition for use in a lithium-ion secondary battery cathode, comprising, mixing elastomeric fluoropolymer, cathode active particles, tetrafluoroethylene polymer and conductive carbon to form the cathode composition.

In one embodiment, prior to mixing with any other component of the cathode composition, the elastomeric fluoropolymer is masticated at elevated temperature (e.g., from about 80°C to about 150°C) sufficient to impart fluidity to the elastomeric fluoropolymer. The present inventors discovered that the elastic fluoropolymer in a less viscous and semi-fluid state, then subsequently mixing with the cathode active particles, conductive carbon and tetrafluoroethylene polymer, results in a cathode composition having all components substantially homogeneously dispersed. Without wishing to be bound by theory, the present inventors believe that the elastomeric fluoropolymer in a semi-fluid or fluid state when forming the present cathode composition acts as a viscous lubricant which is compatible with the tetrafluoroethylene polymer, improving the mixing of the cathode composition components (shown in the present experimental results by shorter mixer torque peak times) and improving dispersion of the cathode composition components (shown in the present experimental results by improved Laser Induced Breakdown Spectroscopy (LIBS) results.)

Further described herein is a method for manufacturing a cathode composition for use in a lithium-ion secondary battery cathode, comprising: i.) mixing an elastomeric fluoropolymer and cathode active particles to form a fluoroelastomer and cathode active composition, and ii.) mixing the fluoroelastomer and cathode active composition with a tetrafluoroethylene polymer, to form the cathode composition. In one embodiment of this method, the starting form of the elastomeric fluoropolymer is pellets or sheet. In one embodiment, prior to the step i.) mixing of the elastomeric fluoropolymer and cathode active, the elastomeric fluoropolymer pellets or sheet are masticated at elevated temperature (e.g., from about 80°C to about 150°C) sufficient to impart fluidity to the elastomeric fluoropolymer, resulting in the pellets or sheet combining into one homogeneous continuous semi-fluid mass of elastomeric fluoropolymer, which results in better mixing and substantially homogenous dispersion of the elastomeric fluoropolymer throughout the cathode active.

In an alternate embodiment, in mixing step i.), fluoroelastomer and cathode active composition is a concentrate containing from about 1 to about 5 weight percent fluoroelastomer, and from about 90 to about 97 weight percent cathode active particles, and then additional elastomeric fluoropolymer is added in mixing step ii.).

In a preferred embodiment, the mixing steps are carried out free from solvent. Alternately stated, the mixing steps are carried out by dry mixing, wherein the components of the cathode composition are in a dry form, e.g., agglomerates, granules, beads, pellets, sheet or powder.

In one embodiment, mixing step ii.) is carried out by applying a shear force to the composition of fluoroelastomer, cathode active particles, tetrafluoroethylene polymer and conductive carbon, whereby the shear force is sufficient such that said tetrafluoroethylene polymer is fibrillated.

In one embodiment, the temperature of the mixing steps is from about 80°C to about 150°C. In another embodiment, the temperature of the mixing steps is about 120°C.

In one embodiment the mixing steps are carried out in a mixer, wherein the fill factor is from about 75% to about 95%, and the maximum mixing torque occurs within about 0.5 to about 3 minutes of initiating mixing. Mixers of utility in the present method can be easily determined by the person of average skill in this field and include mixers capable of generating high shear forces and generally applicable for homogeneously mixing plastic and rubber materials.

In the present method, the degree of dispersion of the tetrafluoroethylene polymer and fluoroelastomer in the cathode composition resulting from the mixing steps can be determined by Laser Induced Breakdown Spectroscopy (LIBS). The degree of dispersion of the tetrafluoroethylene polymer and fluoroelastomer in the cathode composition is desirably sufficiently high, so as to enable the cathode composition to be suitable for use as a cathode electrode film in a lithium-ion battery.

In a one preferred embodiment, the degree of dispersion of the tetrafluoroethylene polymer and fluoroelastomer in the cathode composition results in a cathode composition having sufficient elasticity such that a calendared film of the cathode composition can be formed into a tubular shape without failure, for example, fracture, cracking, crazing, or other structural discontinuities that could result in poor cathode performance.

### EXAMPLES

### MATERIALS

a. Cathode active: LMO (lithium manganese oxide) dry powder, supplier Posco Es Materials
b. PTFE1 (P1): tetrafluoroethylene homopolymer dry powder, melt creep viscosity of 4.0 x 10¹⁰ Pa·s (4.0 x 10¹¹ poise), supplier Chemours FC LLC
c. PTFE2 (P2): modified tetrafluoroethylene dry powder, melt creep viscosity of 1.8 x 10¹⁰ Pa·s (1.8 x 10¹¹ poise), supplier Chemours FC LLC
d. PTFE3 (P3): modified tetrafluoroethylene dry powder, melt creep viscosity of 1.3 x 10 Pa·s (1.3 x 10¹⁰ poise), supplier Chemours FC LLC
e. Fluoroelastomer1 (F1): VDF/HFP copolymer pellets or sheet, Mooney viscosity 5.39 Nm (65 MU) measured under conditions ML 1 + 10 (100°C) according to ASTM D1646, supplier Chemours FC LLC
f. Fluoroelastomer2 (F2): VDF/HFP/TFE copolymer pellets or sheet, Mooney viscosity 6.22 Nm (75 MU) measured under conditions ML 1 + 10 (121°C) according to ASTM D1646, supplier Chemours FC LLC
g. Fluoroelastomer3 (F3): VDF/TFE/PMVE copolymer pellets or sheet, Mooney viscosity 5.39 Nm (65 MU) measured under conditions ML 1 + 10 (121°C) according to ASTM D1646, supplier Chemours FC LLC
h. Fluoroelastomer4 (F4): VDF/HFP/TFE copolymer pellets or sheet, Mooney viscosity 1.91 Nm (23 MU) measured under conditions ML 1 + 10 (121°C) according to ASTM D1646, supplier Chemours FC LLC

### PROCEDURE

Amounts of elastomeric fluoropolymer (rubbery/elastic pellets or sheet) were added to a Brabender mixer for mastication at 120°C at 60 RPM for a period of 1 minute to generate a less viscous and semi-fluid continuous mass of elastomeric fluoropolymer. Amounts of cathode active particles were then added to the Brabender mixer to mix with the semi-fluid elastomeric fluoropolymer and distribute the elastomeric fluoropolymer homogeneously throughout the cathode active particle matrix. The mixing was carried out at 120°C at 60 RPM for a period of 0.5 minute. Amounts of tetrafluoroethylene polymer binder powder were then added to the Brabender mixer to mix with the previously-formed cathode active particle and elastomeric fluoropolymer mixture, to distribute the tetrafluoroethylene polymer binder powder homogeneously throughout the cathode active particle matrix, and to fibrillate the tetrafluoroethylene polymer. The mixing was carried out at 120°C at 60 RPM for a period of time sufficient to observe the MPT (peak torque maximum time (minutes)) and MPTQ (maximum peak torque (kgf.m)), evidence of fibrillation of the tetrafluoroethylene polymer, and then mixing was continued under these conditions for an additional 5 minutes. The formed cathode mixture was then removed from the mixer, cooled to room temperature and observed visually (by the naked eye) and by SEM (scanning electron microscope) to assess degree of mixing, dispersion of the elastomeric fluoropolymer and tetrafluoroethylene polymer throughout the cathode active particle continuous phase, and to assess extent of fibrillation of the tetrafluoroethylene polymer. A portion of the so-formed cathode mixture was taken and pressed at a temperature of from 120°C to 200°C to form a 200 micrometer thick film. The resultant film was then observed visually (by the naked eye), by SEM (scanning electron microscope) and by Laser Induced Breakdown Spectroscopy (LIBS) microscope.

For the purposes of enabling analysis of dispersion of the cathode composition components by SEM and LIBS, conductive carbon was excluded from these example compositions, as it complicated and obscured the sample analysis by SEM and/or LIBS. However, when included in the cathode compositions, the conductive carbon did not substantially otherwise change the observed experimental mixing, dispersion and fibrillation results.

### RESULTS

Table 1 Key: Ex = Example number; C = cathode active (wt%); P1 = PTFE1 (wt%); P2 = PTFE2 (wt%); P3 = PTFE3 (wt%); F1 = Fluoroelastomer1 (wt%); F2 = Fluoroelastomer2 (wt%); F3 = Fluoroelastomer3 (wt%); F1 = Fluoroelastomer4 (wt%); FF = mixer fill factor (% of mixer volume); MPT = peak torque maximum time (minutes); MPTQ = maximum peak torque (kgf.m); ST = set temperature of mixer (°C); CT = mixer chamber measured temperature (°C)

**Table 1**

| Ex | C | P1 | P2 | P3 | F1 | F2 | F3 | F4 | FF | MPT | MPTQ | ST | CT | Comment |
|---|---|---|---|---|---|---|---|---|---|---|---|---|---|---|
| 1 | 97 | 3 | | | | | | | 85 | 3 | 23.5 | 150 | 143.0 | LIBS data CM-7 (Figure 3) |
| 2 | 95 | | 5 | | | | | | 90 | 20 | 20.0 | 150 | 150.5 | NA |
| 3 | 95 | 2.5 | | | 2.5 | | | | 85 | 0.5 | 15.0 | 120 | 143.2 | NA |
| 4 | 97 | 2 | | | 1 | | | | 85 | 1 | 13.2 | 120 | 142.3 | NA |
| 5 | 97 | | 2 | | 1 | | | | 85 | 4 | 9.1 | 120 | 138.8 | NA |
| 6 | 97 | | | 2 | 1 | | | | 85 | 15 | 0.0 | 120 | 138.1 | no torque increase |
| 7 | 97 | 2 | | | | 1 | | | 85 | 1 | 15.3 | 120 | 145.2 | NA |
| 8 | 97 | 2 | | | | | 1 | | 85 | 1.5 | 15.2 | 120 | 142.0 | NA |
| 9 | 97 | 2 | | | | 1 | | | 75 | 2 | 12.3 | 150 | 138.1 | NA |
| 10 | 97 | 2 | | | | 1 | | | 85 | 1 | 13.4 | 150 | 145.1 | NA |
| 11 | 97 | 2 | | | | 1 | | | 95 | 0.5 | 15.6 | 150 | 139.2 | LIBS data CM 5-1 (Figure1) |
| 12 | 97 | 2 | | | | 1 | | | 85 | 1 | 15.4 | 120 | 112.9 | LIBS data CM5-2 (Figure 2) |
| 13 | 97 | 2 | | | | | | 1 | 85 | 1.5 | 12.4 | 120 | 116.1 | LIBS data CM 9 (Figure 4) |
| 14 | 97 | | | | | 3 | | | 85 | 25 | 0.0 | 150 | 138.4 | no torque increase |

In all examples shown in Table 1, the RPM (revolutions per minute) setting of the mixer was 60 RPM.

Example 11 is a composition of: 97 wt% cathode active (LMO), 2 wt% PTFE1 (P1) (tetrafluoroethylene homopolymer dry powder, relatively high melt creep viscosity of 4.0 x 10¹⁰ Pa·s (4.0 x 10¹¹ poise)), and 1 wt% Fluoroelastomer2 ((F2) (VDF/HFP/TFE copolymer, relatively high Mooney viscosity 6.22 Nm (75 MU) measured under conditions ML 1 + 10 (121°C) according to ASTM D1646). The mixer fill factor is 95%, the mixer peak torque maximum time is 0.5 minutes, the mixer maximum peak torque is 15.6 kgf.m, the mixer set temperature is 150°C, and the mixer chamber measured temperature is 139.2°C. Figure 1 is the fluorine content distribution plot obtained from LIBS microscopy carried out on a film of Example 11 composition. This plot shows that the fluoropolymer binder components of this composition are effectively homogeneously dispersed through the major component cathode active. A 200 micrometer thick film of Example 11 composition is found to have sufficient elasticity such that it can be formed into a tubular shape without fracture and so has utility as a cathode electrode film in a lithium-ion battery.

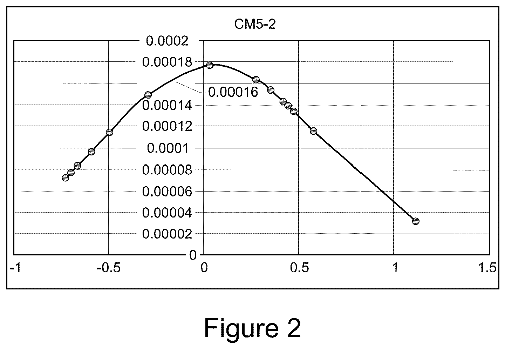

Example 12 is identical to Example 11, except that the mixer fill factor is 85%, the mixer peak torque maximum time is 1 minutes, the mixer maximum peak torque is 15.4 kgf.m, the mixer set temperature is 120°C, and the mixer chamber measured temperature is 112. 9°C. Figure 2 is the fluorine content distribution plot obtained from LIBS microscopy carried out on a film of Example 12 composition. This plot shows that the fluoropolymer binder components of this composition are very effectively homogeneously dispersed through the major component cathode active. A 200 micrometer thick film of Example 12 composition is found to have sufficient elasticity such that it can be formed into a tubular shape without fracture and so has utility as a cathode electrode film in a lithium-ion battery.

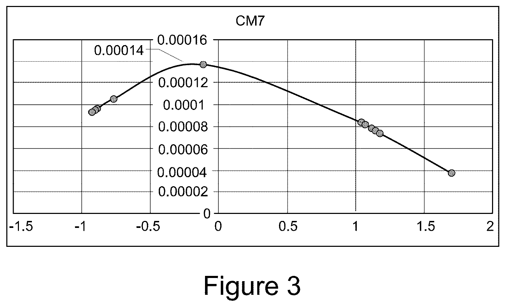

Example 1 is a comparative composition of: 97 wt% cathode active (LMO) and 3 wt% PTFE1 (P1) (tetrafluoroethylene homopolymer dry powder, relatively high melt creep viscosity of 4.0 x 10¹⁰ Pa·s (4.0 x 10¹¹ poise)) containing no elastomeric fluoropolymer. The mixer fill factor is 85%, the mixer peak torque maximum time is 3 minutes, the mixer maximum peak torque is 23.5 kgf.m, the mixer set temperature is 150°C, and the mixer chamber measured temperature is 143.0°C. Figure 3 is the fluorine content distribution plot obtained from LIBS microscopy carried out on a film of Example 1 composition. This plot shows that the fluoropolymer binder components of this composition, in the absence of elastomeric fluoropolymer, are not effectively dispersed through the major component cathode active in the present dry mixing process. A 200 micrometer thick film of Example 1 composition is found to have insufficient elasticity such that it cannot be formed into a tubular shape without fracture and so is unlikely to have utility as a cathode electrode film in a lithium-ion battery.

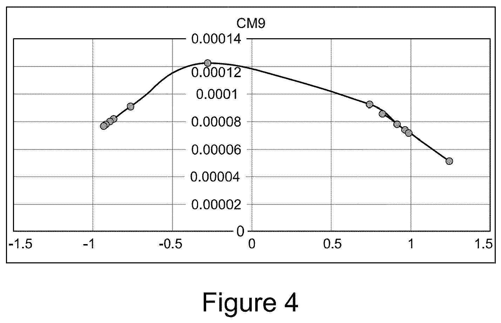

Example 13 is a comparative composition of: 97 wt% cathode active (LMO) and 2 wt% PTFE1 (P1) (tetrafluoroethylene homopolymer dry powder, relatively high melt creep viscosity of 4.0 x 10¹⁰ Pa·s (4.0 x 10¹¹ poise)) and 1 wt% Fluoroelastomer4 ((F4): VDF/HFP/TFE copolymer pellets or sheet, Mooney viscosity 1.91 Nm (23 MU) measured under conditions ML 1 + 10 (121°C) according to ASTM D1646.) The mixer fill factor is 85%, the mixer peak torque maximum time is 1.5 minutes, the mixer maximum peak torque is 12.4 kgf.m, the mixer set temperature is 120°C, and the mixer chamber measured temperature is 116.1°C. Figure 4 is the fluorine content distribution plot obtained from LIBS microscopy carried out on a film of Example 13 composition. This plot shows that the fluoropolymer binder components of this composition are not effectively dispersed through the major component cathode active in the present dry mixing process by using an elastomeric fluoropolymer having relatively low Mooney viscosity. A 200 micrometer thick film of Example 13 composition is found to have insufficient elasticity such that it cannot be formed into a tubular shape without fracture and so is unlikely to have utility as a cathode electrode film in a lithium-ion battery.

## Claims

1. A fluoropolymer binder composition for use in a lithium-ion secondary battery cathode, comprising: i.) tetrafluoroethylene polymer, and ii.) elastomeric fluoropolymer,
wherein said tetrafluoroethylene polymer is fibrillated, and
wherein said elastomeric fluoropolymer has a Mooney viscosity of at least about 4.98 Nm (60 MU) measured under conditions ML 1 + 10 (121°C) according to ASTM D1646.

2. The binder composition of claim 1, wherein said tetrafluoroethylene polymer has a melt creep viscosity, measured as described in the description, of at least about 1.8 x 10¹⁰ Pa·s (1.8 x 10¹¹ poise), preferably of at least about 2.0 x 10¹⁰ Pa·s (2.0 x 10¹¹ poise), more preferably of at least about 3.0 x 10¹⁰ Pa·s (3.0 x 10¹¹ poise), most preferably of at least about 4.0 x 10¹⁰ Pa·s (4.0 x 10¹¹ poise).

3. The binder composition of claim 1 or 2, wherein said elastomeric fluoropolymer has a Mooney viscosity of at least about 5.81 Nm (70 MU) measured under conditions ML 1 + 10 (121°C) according to ASTM D1646.

4. The binder composition of any one of claims 1 to 3, wherein said elastomeric fluoropolymer is a vinylidene fluoride elastomeric fluoropolymer.

5. The binder composition of claim 4, wherein said vinylidene fluoride elastomeric fluoropolymer comprises a vinylidene fluoride, hexafluoropropylene and tetrafluoroethylene copolymer.

6. The binder composition of any one of claims 1 to 5, wherein said tetrafluoroethylene polymer is a tetrafluoroethylene homopolymer.

7. The binder composition of any one of claims 1 to 6, wherein said tetrafluoroethylene polymer is selected from the group consisting of high molecular weight non-melt fabricable tetrafluoroethylene homopolymer and high molecular weight non-melt fabricable modified tetrafluoroethylene homopolymer.

8. The binder composition of any one of claims 1 to 7, wherein the weight ratio of said tetrafluoroethylene polymer to said elastomeric fluoropolymer is from about 4:1 to about 1:4.

9. The binder composition of any one of claims 1 to 8, formed by a process free from solvent.

10. The binder composition of any one of claims 1 to 9, wherein said composition is formed by dry mixing said tetrafluoroethylene polymer and said elastomeric fluoropolymer.

11. The binder composition of claim 10, wherein said composition is formed by dry mixing said tetrafluoroethylene polymer and said elastomeric fluoropolymer, and applying a shear force to said composition, whereby said tetrafluoroethylene polymer is fibrillated.

12. Use of a fluoropolymer binder composition according to any one of claims 1 to 11 in a lithium-ion secondary battery cathode.

## Patentansprüche

1. Fluorpolymer-Bindemittelzusammensetzung zur Verwendung in einer Lithium-Ionen-Sekundärbatteriekathode, umfassend: i.) Tetrafluorethylenpolymer und ii.) elastomeres Fluorpolymer,
wobei das Tetrafluorethylenpolymer fibrilliert ist, und
wobei das elastomere Fluorpolymer eine Mooney-Viskosität von mindestens etwa 4,98 Nm (60 MU), gemessen unter den Bedingungen ML 1 +10 (121°C) gemäß ASTM D1646, aufweist.

2. Bindemittelzusammensetzung nach Anspruch 1, wobei das Tetrafluorethylenpolymer eine Schmelzkriechviskosität, gemessen wie in der Beschreibung beschrieben, von mindestens etwa 1,8 x 10¹⁰ Pa·s (1,8 x 10¹¹ Poise), bevorzugt von mindestens etwa 2,0 x 10¹⁰ Pa·s (2,0 x 10¹¹ Poise), bevorzugter von mindestens etwa 3,0 x 10¹⁰ Pa·s (3,0 x 10¹¹ Poise), besonders bevorzugt von mindestens etwa 4,0 x 10¹⁰ Pa·s (4,0 x 10¹¹ Poise) aufweist.

3. Bindemittelzusammensetzung nach Anspruch 1 oder 2, wobei das elastomere Fluorpolymer eine Mooney-Viskosität von mindestens etwa 5,81 Nm (70 MU), gemessen unter den Bedingungen ML 1 +10 (121°C) gemäß ASTM D1646, aufweist.

4. Bindemittelzusammensetzung nach einem der Ansprüche 1 bis 3, wobei das elastomere Fluorpolymer ein Vinylidenfluorid-elastomeres Fluorpolymer ist.

5. Bindemittelzusammensetzung nach Anspruch 4, wobei das Vinylidenfluorid-Elastomer-Fluorpolymer ein Vinylidenfluorid-, Hexafluorpropylen- und Tetrafluorethylen-Copolymer umfasst.

6. Bindemittelzusammensetzung nach einem der Ansprüche 1 bis 5, wobei das Tetrafluorethylenpolymer ein Tetrafluorethylenhomopolymer ist.

7. Bindemittelzusammensetzung nach einem der Ansprüche 1 bis 6, wobei das Tetrafluorethylenpolymer ausgewählt ist aus der Gruppe bestehend aus hohem Molekulargewicht, nicht schmelzverarbeitbarem Tetrafluorethylenhomopolymer und hohem Molekulargewicht, nicht schmelzverarbeitbarem, modifiziertem Tetrafluorethylenhomopolymer.

8. Bindemittelzusammensetzung nach einem der Ansprüche 1 bis 7, wobei das Gewichtsverhältnis des Tetrafluorethylenpolymers zu dem elastomeren Fluorpolymer etwa 4:1 bis etwa 1:4 beträgt.

9. Bindemittelzusammensetzung nach einem der Ansprüche 1 bis 8, hergestellt durch einen lösungsmittelfreien Prozess.

10. Bindemittelzusammensetzung nach einem der Ansprüche 1 bis 9, wobei die Zusammensetzung durch Trockenmischen des Tetrafluorethylenpolymers und des elastomeren Fluorpolymers hergestellt wird.

11. Bindemittelzusammensetzung nach Anspruch 10, wobei die Zusammensetzung durch Trockenmischen des Tetrafluorethylenpolymers und des elastomeren Fluorpolymers und Anwenden einer Scherkraft auf die Zusammensetzung hergestellt wird, wodurch das Tetrafluorethylenpolymer fibrilliert wird.

12. Verwendung einer Fluorpolymer-Bindemittelzusammensetzung nach einem der Ansprüche 1 bis 11 in einer Lithium-Ionen-Sekundärbatteriekathode.

## Revendications

1. Composition de liant fluoropolymère destinée à être utilisée dans une cathode de batterie secondaire au lithium-ion, comprenant : i.) un polymère de tétrafluoroéthylène, et ii.) un fluoropolymère élastomère,
dans laquelle ledit polymère de tétrafluoroéthylène est fibrillé, et
dans laquelle ledit fluoropolymère élastomère présente une viscosité Mooney d'au moins environ 4,98 Nm (60 MU) mesurée dans les conditions ML 1 +10 (121°C) selon la norme ASTM D1646.

2. Composition de liant selon la revendication 1, dans laquelle ledit polymère de tétrafluoroéthylène présente une viscosité de fluage à l'état fondu, mesurée comme décrit dans la description, d'au moins environ 1,8 x 10¹⁰ Pa·s (1,8 x 10¹¹ poise), de préférence d'au moins environ 2,0 x 10¹⁰ Pa·s (2,0 x 10¹¹ poise), plus préférentiellement d'au moins environ 3,0 x 10¹⁰ Pa·s (3,0 x 10¹¹ poise), le plus préférentiellement d'au moins environ 4,0 x 10¹⁰ Pa·s (4,0 x 10¹¹ poise).

3. Composition de liant selon la revendication 1 ou 2, dans laquelle ledit fluoropolymère élastomère présente une viscosité Mooney d'au moins environ 5,81 Nm (70 MU) mesurée dans les conditions ML 1 +10 (121 C) selon la norme ASTM D1646.

4. Composition de liant selon l'une quelconque des revendications 1 à 3, dans laquelle ledit fluoropolymère élastomère est un fluoropolymère élastomère de fluorure de vinylidène.

5. Composition de liant selon la revendication 4, dans laquelle ledit fluoropolymère élastomère de fluorure de vinylidène comprend un copolymère de fluorure de vinylidène, d'hexafluoropropylène et de tétrafluoroéthylène.

6. Composition de liant selon l'une quelconque des revendications 1 à 5, dans laquelle ledit polymère de tétrafluoroéthylène est un homopolymère de tétrafluoroéthylène.

7. Composition de liant selon l'une quelconque des revendications 1 à 6, dans laquelle ledit polymère de tétrafluoroéthylène est choisi parmi le groupe consistant en un homopolymère de tétrafluoroéthylène non fondu à haut poids moléculaire et un homopolymère de tétrafluoroéthylène modifié non fondu à haut poids moléculaire.

8. Composition de liant selon l'une quelconque des revendications 1 à 7, dans laquelle le rapport pondéral dudit polymère de tétrafluoroéthylène audit fluoropolymère élastomère est d'environ 4:1 à environ 1:4.

9. Composition de liant selon l'une quelconque des revendications 1 à 8, formée par un processus exempt de solvant.

10. Composition de liant selon l'une quelconque des revendications 1 à 9, dans laquelle ladite composition est formée par mélange à sec dudit polymère de tétrafluoroéthylène et dudit fluoropolymère élastomère.

11. Composition de liant selon la revendication 10, dans laquelle ladite composition est formée par mélange à sec dudit polymère de tétrafluoroéthylène et dudit fluoropolymère élastomère, et par application d'une force de cisaillement à ladite composition, selon laquelle ledit polymère de tétrafluoroéthylène est fibrillé.

12. Utilisation d'une composition de liant fluoropolymère selon l'une quelconque des revendications 1 à 11 dans une cathode de batterie secondaire au lithium-ion.
